# EUROPEAN PATENT APPLICATION

(11) **EP 4 424 146 A1**
(43) Date of publication of application: **04.09.2024**
(21) Application number: 23159997.8
(22) Date of filing: 03.03.2023
(51) Int. Cl.: A01G 9/033, A01G 9/24

(54) **MODULE FOR A MODULAR VEGETALIZED ROOF OR VEGETALIZED WALL PHOTOVOLTAIC SYSTEM AND RESPECTIVE SYSTEM**

(71) Applicant: green roofs PLANTIKA GmbH, 1200 Vienna (AT); Héole (SAS), 56000 Vannes (FR)
(72) Inventor: Lebranchu, Mathieu, 1200 Vienna (AT); Lebranchu, Philipp, 28717 Bremen (DE); Kubler, Jean-Marc, 75004 Paris (FR); Wantz, Guillaume, 33600 Pessac (FR)
(74) Representative: Flach Bauer & Partner Patentanwälte mbB

(57) **Abstract**

The present invention relates to a module 100 for a modular vegetalized roof or vegetalized wall photovoltaic system 1. The module comprising a planting tray 10. The planting tray 10 being adapted for receiving a planting structure for growing plants and a support structure. The support structure 20, being attached to the planting tray. Further, the module 100 comprises a photovoltaic unit 30, the photovoltaic unit being supported by the tiltable support structure 20 so as to be movable relative to the planting tray 10.

## Description

### Field of the invention

The present invention relates to a module for a modular vegetalized roof or vegetalized wall photovoltaic system, to a modular vegetalized roof or vegetalized wall photovoltaic system and to a method for operating said system.

### Background

Vegetalization of roofs or walls (also denoted as roof or wall greening) is known as a promising solution to enhanced thermal insulation of buildings both in winter and summer seasons. Further, vegetalized roofs can absorb and retain rainwater, reducing the amount of storm water runoff and the burden on local infrastructure. Even more, vegetalized roofs can improve air quality by absorbing pollutants and releasing oxygen and provide habitat for wildlife, including birds and insects. Known vegetalized roofs can also extend the lifespan of a roof and protect the underlying roofing material from UV rays and other environmental factors.

For conventional roof planting, a water storage and drainage layer as well as a substrate for the planting are applied to a watertight and root-resistant roof seal. However, those conventional roof plantings are not suitable for steep roofs.

Even further, in present days, renewable energy sources, such as photovoltaics, become more important. Particularly, as solar photovoltaics (PV) provides for a climate friendly energy source producing no local CO2e emissions. Further, PV systems require very little maintenance, making them a cost-effective option over time.

However, vegetalized roofing and PV-systems are mutually exclusive, as plants need light and rain water so they cannot be fully covered by conventional solar panels. Likewise, PV-systems must be exposed to unobstructed sunlight, as shadowing significantly reduces performance.

There are approaches to provide a combination of roof vegetalization and photovoltaics. However, those systems are provided on flat roofs only. Here, a vegetalized roofing is partially covered with photovoltaic units. Thus, there are plant growing areas and - distinct therefrom - photovoltaic areas.

Thus, there is a need in the art to improve roof and wall vegetalization systems so as to allow for both, healthy plant growth and high photovoltaic energy output.

### Summary

This object is achieved by a module for a modular vegetalized roof or vegetalized wall photovoltaic system according to claim 1, by a modular vegetalized roof or vegetalized wall photovoltaic system according to claim 13 and by a method for operating said modular vegetalized roof and/or vegetalized wall photovoltaic system according to claim 16. Further aspects are given in the dependent claims.

In particular, the object is achieved by a module for a modular vegetalized roof or vegetalized wall photovoltaic system. The module comprises a planting tray. The planting tray is adapted for receiving a planting structure for growing plants.

Particularly, the planting tray may have a length in the range of 0.5 to 2 m and a width in the range of 0.3 to 1 m. It is to be understood that those dimensions are only exemplary, and that the planting tray may have other dimensions, depending on the intended use.

The height of the planting tray depends on the type of roof/wall vegetalization to be used. For example, extensive vegetalization, intensive vegetalization, sedum vegetalization, and/or the like can be provided. Extensive vegetalizations are lightweight and require minimal maintenance, making them suitable for large roofs. They typically include of a shallow layer of soil and low-growing plants. Intensive vegetalizations are heavier and require more maintenance than extensive vegetalizations. They can support a wider variety of plants. Sedum vegetalizations are a type of extensive vegetalizations that are covered with a layer of Sedum plants, which are hardy and require minimal maintenance. Further, hybrid vegetalizations can be provided, which are a combination of extensive and intensive vegetalizations.

In a certain aspect, a multi-layer planting structure may be arranged in the planting tray. This multi-layer planting structure may have an upper planting layer, a substrate layer arranged below the planting layer and a water drainage layer underneath the substrate layer. Further, a root-resistant layer may be arranged below the water drainage layer. The root-resistant layer may be omitted, particularly in case the planting tray has root-resistant properties.

The planting layer includes plants and/or seeds. In a particular aspect, the planting layer may be a roll planting layer. A roll planting layer is a layer of plants that contains ready-to-use vegetation and can be obtained from specialist retailers as rolled goods. Additionally, the seeds can be provided via a rolled-up substrate. E.g. paper webs including seeds can be provided as planting layer. The substrate layer allows the plants to form roots and typically provides the main water storage capacity of the layers of the multi-layer planting structure. Additionally, fertilizers may be present in the substrate layer.

The water drainage layer may include a knobbed panel or knobbed film with a large number of water-impermeable depressions which form individual water containers. Those containers may be (at least partially) filled with water storing elements, such as sponges, clay granules, expanded clay, and/or the like. Hence, additional water can be stored for longer dry periods. Further this drainage layer serves for guiding excess water from the substrate layer to prevent overwatering the plants.

The root-resistant layer may include or even consists of a root-resistant film (e.g. bitumen and/or plastics) or a root-resistant plate. Such a planting structure enables particularly good plant growth and a long-lasting water supply for the plants without the risk of overwatering during longer rainy periods.

Further, at least one of the layers may include a textile, and/or at least two of the layers may be separated by a textile. Suitable textiles are non-woven, rock wool, and/or the like. For example, durable, pressure-stable hydrophilic mineral wool mats or recycled synthetic fibers, which are mechanically needled may be used. The textile allows the plants to take root particularly well within the textile layer.

Further, the planting tray may comprise drainage holes which may be provided in the bottom and/or at least one side wall of the planting tray. Those drainage holes may be in fluidic communication with a neighboring planting tray. Thus, water collected in a first planting tray is guided to a second (neighboring) planting tray before being released from the planting trays of a modular vegetalized roof or vegetalized wall photovoltaic system. Additionally, and/or alternatively, the drainage holes may guide excess water towards the actual roofing/wall, a respective rainwater drainage system or to a water storage. In case excess water is stored, it can be used for irrigation when needed.

According to a certain aspect, the planting tray may include or consists of a perforated sheet and/or a perforated plate. In this aspect, the drainage holes of the planting tray are formed by the holes in the perforated sheet/plate. This allows excess water to be drained from the planting tray in a particularly effective manner. Furthermore, such a planting tray offers additional ventilation of the substrate and allows lateral plant grow (i.e. at the side walls of the planting tray). In another aspect, the planting tray includes or consists of a continuous sheet/or plate which is provided with drainage holes e.g. in form of bores and/or slits.

The planting tray may be made of a non-rusting material, in particular aluminum, stainless steel, plastics and/or reinforced composite materials, such as fiber reinforced plastics.

The planting tray may be (at least partially) covered by a retaining structure, allowing to install the planting tray in a very steep or even vertical orientation, so as to provide a wall vegetalization. The retaining structure may include retaining bars, a retaining grid, a retaining net and/or retaining textile (e.g. a non-woven). The retaining structure prevents the multi-layer planting structure from falling (or trickling) out of the planting tray, while allowing plants to grow through the structure.

Further, the module comprises a support structure. The support structure is attached (directly or indirectly) to the planting tray. Even further, the module comprises a photovoltaic unit (also denoted as photovoltaic module or photovoltaic panel). The photovoltaic unit being supported by the support structure. The support structure may be fixed relative to the planting tray, so as to define an angular orientation of the photovoltaic unit relative to the planting tray. For example, the photovoltaic unit may be arranged substantially parallel to the planting tray (tilting angle α = 0°) or substantially perpendicular relative to the planting tray (tilting angle α = 90°). Any other tilting angle, e.g. in a range from 0° to 180°, is also possible.

In a particular aspect, the photovoltaic unit is supported by the support structure so as to be movable relative to the planting tray. For example, the support structure may be a tiltable support structure. Said tiltable support structure may be configured to be fixedly arranged in different tilting angles α, relative to the planting tray. Hence, also the photovoltaic module, being supported by the support structure is movable relative to the planting tray.

In a further aspect, the tiltable support structure is configured to be fixedly arranged in different tilting angles α, relative to the planting tray. For example, the tiltable support structure may be oriented and fixed substantially parallel to the planting tray (i.e. a planting plane thereof). Further, the tiltable support structure may be oriented and fixed substantially perpendicular to the planting tray. It is to be understood that the tiltable support structure may be oriented and fixed in any other angular orientation relative to the planting tray, e.g. in order to adjust the angular orientation of the support structure to match an angle of incidence of the sun, taking into account a roof slope angle. The tiltable support structure may be tilted manually or may be actuated by means of an actuator. If tilted manually, the desired angular orientation may be adjusted upon installing the module and may remain unchanged during use. Particularly in case of an actuated tiltable support structure, the angular orientation may be changed during use.

Accordingly, the photovoltaic unit can be arranged (via the tiltable support structure) in different angular orientations. This allows to provide for an ideal orientation towards the sun, while allowing plants to be grown in the planting tray to receive sufficient sun light and water. The angular orientation of the support structure/photovoltaic unit may be chosen so as to guide rain water falling onto the photovoltaic unit into the planting tray. Thus, roof vegetalization and operation of photovoltaic unit(s) becomes possible in the same roof/wall area. Further, the module may be used for growing plants (e.g. flowers or crops), while the photovoltaic unit provides sun protection (shadow) for the plants to be grown and at the same time harvests energy.

In a further aspect, the support structure can be tilted from a first angular orientation to a second angular orientation, wherein in the first angular orientation, the photovoltaic unit may be substantially parallel to the planting tray (α = 0°), and wherein in the second angular orientation, the photovoltaic unit may be substantially perpendicular to the planting tray (α = 90°). The angular range in which the tiltable support structure can be tilted (pivoted) may be in a range from -20° ≤ α ≤ 180°, or in a range from 0° ≤ α ≤ 180°, or in a range from 0° ≤ α ≤ 135°, or in a range from 0° ≤ α ≤90°, or in a range from 0° ≤ α ≤ 45°.

This allows folding the module, e.g. to minimize wind loads and to prevent damages and/or to open the module for allowing sun light and/or rain to reach the plants. Depending on the tilting angle, plants can be protected from intense sunlight and from overheating. The tiltable support structure can be fixed in the first and/or second angular orientation and/or in any other angular orientation.

The tiltable support structure may include at least one tiltable beam (e.g. an aluminum beam), wherein the photovoltaic unit is mounted (directly or indirectly) on the tiltable beam. Further, the tiltable support structure may include a tiltable frame (e.g. an aluminum frame), wherein the photovoltaic unit is mounted (directly or indirectly) on the tiltable frame. The frame may include at least one tiltable beam and may at least partially surround the photovoltaic unit (e.g. on at least two sides, on at least three sides, or on four sides). Providing beams allows for a lightweight structure, wherein a frame offers more stability.

It is to be understood, the a tiltable beam/frame of a first module may additionally support a photovoltaic unit assigned to a second neighboring planting tray. Thus, in a modular vegetalized roof and/or vegetalized wall photovoltaic system, modules with tiltable support structure may be arranged alternately with modules having only a planting tray and a respective assigned photovoltaic unit.

In a further aspect, the photovoltaic unit may be configured to be rolled-up, wherein the photovoltaic unit is supported rollable in the support structure. Hence, the photovoltaic unit is supported by the support structure so as to be movable (rollable) relative to the planting tray.

The support structure, which may be a tiltable support structure, may support an axis of the rollable photovoltaic unit, so as to allow the photovoltaic unit to be unrolled or rolled-up. Lateral edges of the photovoltaic unit may be guided in the support structure, or respective guide rails thereof, so as to support the rolling.

In a particular aspect, the photovoltaic unit may be unrolled or rolled-up to a certain degree only. The photovoltaic unit may then be fixed in said partially unrolled/rolled-up state. Thus, plants can be partially covered and protected from environmental influences, such as excess sun, rain- or snowfalls. Further, water can reach the plants in case the photovoltaic unit is (partially) rolled-up.

The unrolling/rolling-up of the photovoltaic unit may be done manually or may be actuated by means of an actuator (e.g. an electric motor, particularly an electric motor having an external rotor, which may act as axis for the rollable photovoltaic unit).

Further, by rolling up the photovoltaic unit wind- and snow loads on the support structure can be minimized, as the respective attack surface can be significantly reduced. To protect the photovoltaic unit from environmental influence, it may be stored in a housing when being rolled-up, similar to a roller blind box. In a particular aspect, the rollable photovoltaic unit may be pre-tensioned, so as to automatically retracted in the housing, when being not in use.

The module may further comprise a spacing element. The spacing element may be provided between the planting tray and the support structure, so that the photovoltaic unit is spaced apart from the planting tray when being oriented or tilted in parallel relative to the planting tray (α = 0°). Thus, the plants growing in the planting tray do not get damaged when folding the module, as there is provided sufficient space between the planting tray and the tiltable support structure (respectively the photovoltaic unit). Further, the rollable photovoltaic unit can be unrolled/rolled up without risking to trap the plants.

The size of the spacing element may be chosen dependent on the type of vegetalization (e.g. intensive, extensive, sedum, ...). In a particular aspect, the spacing element provides for a distance between the photovoltaic unit and the planting tray, when the support structure is in substantial parallel orientation relative to the planting tray (α = 0°). For example, the distance may be in a range from 5 cm to 70 cm, or in a range from 7 cm to 30 cm, or in a range from 12 cm to 18 cm.

The module may further comprise an additional support element. The additional support element may abut the (tiltable) support structure, when the support structure is in parallel orientation (tilted) relative to the planting tray (α = 0°). Optionally a locking element may be provided. The locking element serves for locking the tiltable support structure in a parallel orientation relative to the planting tray. Thus, in case of high wind loads, the module remains folded and damages can be prevented. The locking may be released automatically, when unfolding the module again.

The module may further comprise at least one pre-loading element, the pre-loading element being configured for pre-loading the tiltable support structure in a predefined angular orientation. The pre-loading element may be a gas pressure spring, a mechanical spring, an electrical spring, a magnetic spring and/or the like. For example, a pre-loading element (e.g. a gas pressure spring) may be mounted to the tiltable support structure and the planting tray, wherein in equilibrium, the pre-loading element fixes the tiltable support structure in a desired angular orientation. This facilitates unfolding the module. Further, in case of wind loads, the tiltable support structure and the photovoltaic unit, respectively are allowed to be deflected and will be reflected automatically in the desired angular orientation (by the pre-loading element) after the wind loads is gone.

The module may further comprise or may be actuated by an actuator. The actuator is adapted to adjust the angular orientation of the tiltable support structure and/or the actuator is adapted to unroll and/or roll-up the rollable photovoltaic unit. For tilting and rolling, there may be provided different actuators. In a particular aspect, the actuator(s) may include a gearing. The actuator(s) may be adapted to adjust the angular orientation of different tiltable support structures and/or an unrolling portion of the rollable photovoltaic unit, being assigned to different modules. Further, the actuator(s) may be manually controlled and/or may be automatically controlled.

In case of an automated control, the angular orientation of the tiltable support structure (and respectively of the photovoltaic unit) may be automatically adapted to obtain an ideal orientation of the photovoltaic unit relative to the sun, so as to provide a maximum energy harvesting. For controlling the actuator, day-time, season, and/or geographical position may be considered.

Further, the actuator may be coupled to an anemometer, so as to adjust an angular orientation α of the tiltable support structure and/or an unrolling portion of the rollable photovoltaic unit (i.e. degree of unrolling the photovoltaic unit) depending on a measured wind speed. In an alternative embodiment, the actuator may be controlled based on external weather data, e.g. provided by a weather station or any other external provider.

The actuator may include any type of drive, such as a linear drive, a rotary drive, an electric drive, a pneumatic drive, or a hydraulic drive. In case of electric drives, servo motors or stepper motors may be used. For rolling up/unrolling the photovoltaic unit electric motors with an external rotor may be used, which rotor serves as axis for the photovoltaic unit.

Further, at least one brake, such as a mechanical brake, may be provided. The brake may secure the motor, the axis and/or the tiltable support structure in a desired angular orientation/. degree of unrolling. Thus the motor can be switched off, after having reached the desired angular orientation/degree of unrolling, for saving energy.

The gearing may include gearing wheels, rack and pinions, pistons (hydraulic and/or pneumatic), or any kind of cables (including bowden cables), belts, chains and/or ropes. In a particular embodiment, an electric drive may be connected to a cable pull system, which in turn is coupled to at least one tiltable support structure or a rollable photovoltaic unit. The cable pull system may include deflection elements such as guide rolls, to provide for a minimum of cable friction. By operating the electric drive, the angular orientation of the tiltable support structure(s) and/or the degree of unrolling of the rollable photovoltaic unit coupled to the cable pull system can be adjusted.

The photovoltaic unit may be a semitransparent photovoltaic unit and/or the photovoltaic unit may include transparent areas. Thus, the plants being at least partially arranged underneath the photovoltaic unit are provided with sunlight.

A semitransparent photovoltaic unit may be transparent for a certain frequency range of the solar light only. Hence, the photovoltaic unit may serve as a light filter. The frequency range passing the photovoltaic unit may be chosen depended on the plants grown in the planting tray. This allows for promoting plant growth by respective light filtering.

Further, the photovoltaic unit may be a non-transparent photovoltaic unit. For allowing the plants to receive sunlight, the tiltable support structure can be tilted accordingly and/or the photovoltaic unit can be rolled up.

In a particular aspect, the photovoltaic unit is chosen from the group of:
- an organic photovoltaic, OPV, module;
- a crystalline silicon photovoltaic unit;
- an amorphous silicon photovoltaic unit;
- a CZTS, photovoltaic unit;
- a CIGS photovoltaic unit;
- a DSSC photovoltaic unit;
- a perovskite photovoltaic unit;
- a III-V materials based photovoltaic unit, and/or
- a combination thereof.

Organic photovoltaic (OPV) modules are solar cells that use organic materials, such as polymers (organic chemistry polymers) or small molecules, to convert sunlight into electricity.

Crystalline silicon (c-Si) photovoltaics refer to solar cells that are made from crystalline silicon, which is presently the most common material used in traditional solar panels. They offer a high efficiency.

Amorphous silicon (a-Si) photovoltaic units are solar cells that are made from amorphous silicon, which is a non-crystalline form of silicon. Unlike crystalline silicon, amorphous silicon does not have a regular repeating pattern of atoms, and it can be deposited in a thin film on a variety of substrates. A-Si solar cells are generally less efficient than c-Si solar cells, but they can be manufactured at a lower cost and can be made into flexible and/or semi-transparent solar cells.

Copper-zinc-tin-sulfide, CZTS, photovoltaic units are photovoltaic units that provide for a low-cost and non-toxic alternative to the traditional materials used in solar cells.

CIGS (Copper Indium Gallium Selenide) photovoltaic units are a type of thin-film solar cells that use a thin layer of the semiconductor material copper indium gallium selenide (CIGS) to convert sunlight into electricity. CIGS solar cells are typically made by depositing thin layers of the CIGS material onto a substrate, typically made of glass or flexible plastic. CIGS solar cells have high efficiency compared to other thin-film solar cells, and they also have the advantage of being flexible and lightweight. They also have a relatively low-cost production process and are more efficient than the other thin film technologies like a-Si.

DSSC (dye-sensitized solar cell) photovoltaic units are a type of photovoltaic units that use a layer of dye molecules to absorb photons from the sun, which excite electrons in the dye and create an electric current.

Perovskite photovoltaic units use a perovskite material as the active layer for converting sunlight into electricity. Perovskite solar cells have a high absorption coefficient and a high open-circuit voltage, which means they can be made into very thin films and have high efficiency.

III-V materials based photovoltaic units are photovoltaic units that use III-V materials as a class of semiconductors, i.e. elements from the third and fifth columns of the periodic table, such as gallium, indium, and phosphorus. III-V based solar cells are made by growing thin layers of III-V materials on a substrate, typically made of germanium or silicon. III-V solar cells provide for their high efficiency and are able to work at a wider range of the spectrum than c-Si or a-Si cells. Further, they are less affected by temperature.

Further, the photovoltaic unit may be rigid or may include a flexible support layer, carrying a photovoltaic layer and/or at least one photovoltaic cell. Further, the photovoltaic layer and/or at least one photovoltaic cell may be encapsulated in a flexible support layer. The flexible support layer may be a plastic film, particularly a transparent plastic film, a woven or non-woven, and/or the like.

This allows to provide a lightweight structure compared to conventional solar cells. Thus, even roofs with limited load bearing capacity can be equipped with roof vegetalization and photovoltaic.

The photovoltaic unit may be mounted to the support structure by means of at least one tensioning means. The tensioning means may be a threaded bolt, a spring, e.g. a spiral spring, or the like. The tensioning means may be arranged between the support structure and the photovoltaic unit. In a particular example, the photovoltaic unit, or a flexible support layer thereof, includes a mounting point (e.g. an eyelet or a loop) for attaching/hanging the tensioning means. Further, the flexible support layer may be mounted to the support structure by means of a cord edge or welting. The support structure may include a respective welting rail or cord edge rail.

The object is further achieved by a modular vegetalized roof and/or vegetalized wall photovoltaic system. The system comprising at least two modules as described above. The modules may be arranged in close proximity to each other and may even be interconnected. Further, the modules may sandwich a planting tray. Thus, in a modular vegetalized roof and/or vegetalized wall photovoltaic system, modules with (tiltable) support structure and/or rollable photovoltaic unit may be arranged alternately with modules having only a planting tray and a respective assigned photovoltaic unit.

The modular design allows to configure and arrange planting trays and/or modules freely on a given roofing or wall. Hence, the available space can be ideally covered. It is to be noted that module of different shape and size may be combined to provide for an ideal coverage. Further, certain spaces can be kept free of modules to facilitate maintenance work. Further, the roofing or wall may be fully covered or may be partially covered with respective modules. For example, at least 10%, or at least 20%, or at least 30%, or at least 40%, or at least 50%, or at least 60%, or at least 70%, or at least 80%, or at least 90%, or at least 95% of the wall's/roof's surface area may be covered.

The system may comprise at least one actuator. The actuator may be assigned to a plurality of modules of the system, wherein the actuator may further be adapted to adjust the angular orientation of respective ones of tiltable support structures and/or an unrolling portion of the rollable photovoltaic unit. Optionally, the actuator includes a gearing. The actuator and gearing may be configured, as outlined above. Particularly, the system may include at least one anemometer, wherein the actuator is operated based on actual wind speeds, measured by said anemometer.

The system may further comprise at least one mounting frame, wherein the mounting frame may be adapted to be installed on a roofing or a wall, and wherein the at least two modules of the system may be adapted to be fixed on the mounting frame. The mounting frame may be adapted to be used on a tile roof, a tin roof, a slate roof, a concrete roof and/or the like.

Particularly the module(s) of the modular vegetalized roof and/or vegetalized wall photovoltaic system may include clamping brackets for clamping the module to the mounting frame. This allows fastening the module(s) in a particularly simple manner.

The object is further achieved by a method for operating a modular vegetalized roof and/or vegetalized wall photovoltaic system. The method including the steps of
- obtaining a wind speed, e.g. using an anemometer of the system and/or an external weather data source, and
- adjusting the angular orientation of respective ones of tiltable support structures and/or an unrolling portion of the rollable photovoltaic unit based on the obtained wind speed; the method optionally comprising the step of
- adjusting the angular orientation of respective ones of tiltable support structures and/or an unrolling portion of the rollable photovoltaic unit based on one of the following:
   ∘ a day time,
   ∘ a seasonal sun position, and/or
   ∘ a geographic location of the system.

### Brief description of the figures

Further features and advantages will be apparent from the following description as well as the accompanying figures, to which reference is made. The figures show in detail:
- Fig. 1: a schematic perspective view of modular vegetalized roof photovoltaic system including several modules;
- Fig. 2: a schematic side view of a module for a vegetalized roof or vegetalized wall roof photovoltaic system;
- Fig. 3: a schematic side view of a module for a vegetalized roof photovoltaic system;
- Fig. 4: a schematic side view of a vegetalized roof photovoltaic system;
- Fig. 5: a schematic detailed view of a support structure;
- Fig. 6: a schematic cut view of a planting tray;
- Fig. 7: a schematic view of a module for a vegetalized roof or vegetalized wall having a rollable photovoltaic module, and
- Fig. 8: a schematic flow diagram.

### Detailed description of the figures

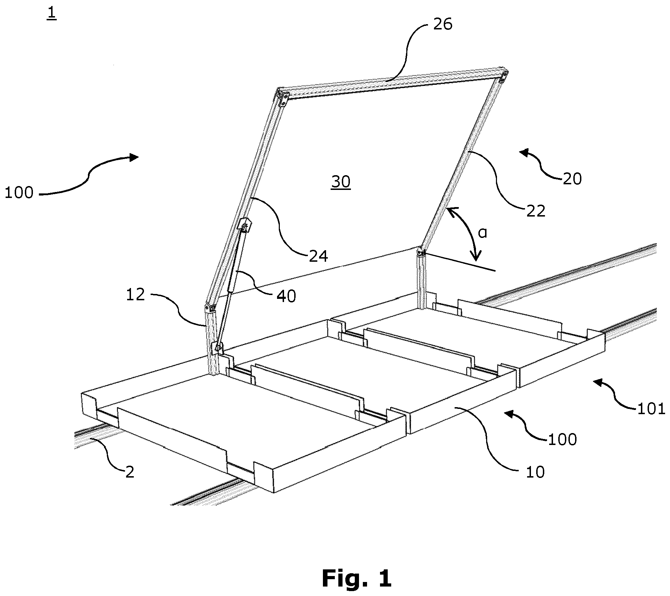

Fig. 1 a schematic perspective view of modular vegetalized roof photovoltaic system 1 including several modules 100, 101.

The modules 101, 102, each comprise a planting tray 10 for growing plants. Further, the modules comprise a support structure, which is a tiltable support structure heaving a tiltable beam 22, 24. The tiltable support structures 22, 24 are attached to a respective one of the planting trays 10 and configured to be fixedly arranged in different tilting angles (angular orientations) α, relative to the planting tray. The tilting angle α may be in a range from -20° ≤ α ≤180°, or in a range from 0° ≤ α ≤ 180°, or in a range from 0° ≤ α ≤ 135°, or in a range from 0° ≤ α ≤90°, or in a range from 0° ≤ α ≤ 45°.

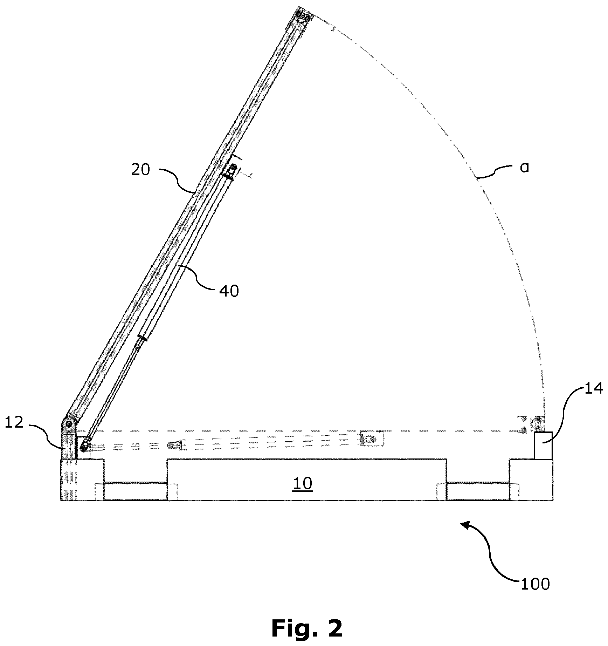

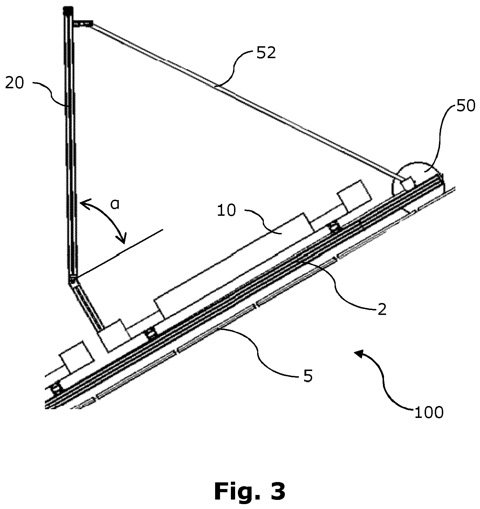

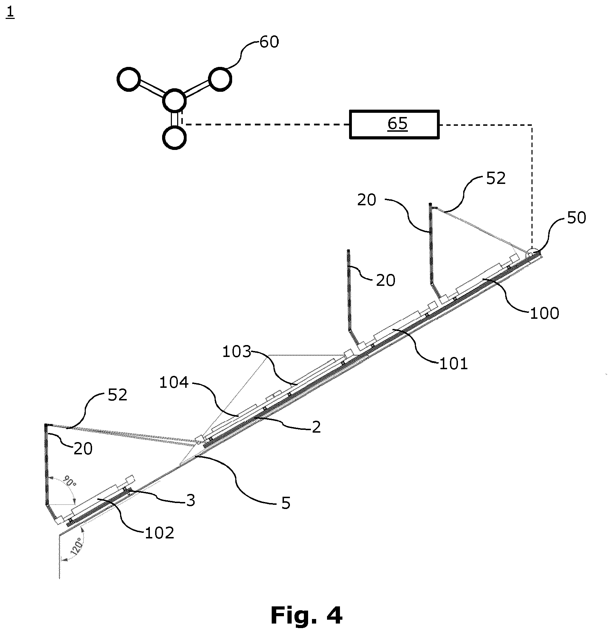

As shown in Fig. 2, the tiltable support structure 20 may be oriented and fixed substantially parallel to the planting tray 10 (cf. dashed lines), or may enclose an angle α with the planting tray 10 in order to adjust the angular orientation of the support structure to match an angle of incidence of the sun. The tiltable support structure may be tilted manually or may be actuated by means of an actuator as explained in greater detail with regard to Figs. 3 and 4.

The tiltable support structures 22, 24 are connected with a connecting beam to from a frame 26. This frame 26 supports a photovoltaic unit 30 and encircles the photovoltaic unit 30 on three sides. Here, the photovoltaic unit 30 is assigned to two neighboring planting trays 10. Accordingly, the size of the photovoltaic unit may exceed the size of a planting tray 10.

The modules 100, 101 each comprise a spacing element 12. The spacing element 12 is provided between the planting tray 10 and the tiltable support structure 20. Accordingly, the photovoltaic unit 30 is spaced apart from the planting tray 10 when being tilted in parallel orientation relative to the planting tray (α = 0°).

As shown in Fig. 2, the module 100 further comprises an additional support element 14. The additional support element 14 abuts the tiltable support structure 20, when the tiltable support structure 20 is tilted in parallel orientation relative to the planting tray (α = 0°). Optionally a locking element may be provided on the additional support element 14 and/or the tiltable support structure 20, for locking the tiltable support structure 20 in a parallel orientation relative to the planting tray 10.

Further module 100 comprises a pre-loading element 40, the pre-loading element 40 is configured for pre-loading the tiltable support structure 20 in a predefined angular orientation (cf. Fig. 2, solid lines). The pre-loading element 40 may be a gas pressure spring and may be mounted to the tiltable support structure 20 and the planting tray 10.

The photovoltaic unit 30 may be a flexible photovoltaic unit, including a flexible support layer, carrying a photovoltaic layer and/or at least one photovoltaic cell. In particular, the photovoltaic unit 30 may be a semi-transparent photovoltaic unit or the photovoltaic unit 30 may include transparent areas.

Fig. 3 a schematic side view of a module 100 for a vegetalized roof photovoltaic system 1 being operated by means of actuator 50. The actuator 50 is adapted to adjust the angular orientation α of the tiltable support structure 20. The actuator 50 may include any type of drive. Here, an electric drive is used. Further, the actuator 50 includes a gearing 52. In the embodiment shown in Fig. 3, the gearing 52 includes a cable pull system, which is coupled to the tiltable support structure 20. The cable pull system may include deflection elements such as guide rolls, to provide for a minimum of cable friction. By operating the electric drive of actuator 50, the cable is pulled or released, thereby changing the angular orientation of the tiltable support structure(s) 20 coupled to the cable pull system.

As best shown in Fig.4, the actuator 50 and particularly the gearing 52 (i.e. the cable pull system) can be coupled to the tiltable support structures 20 of various modules 100, 102. Hence, by operating the actuator 50, the angular orientation of multiple support structures 20 being part of different modules can be adjusted.

The actuator 50 may be manually controlled and/or may be automatically controlled. In case of an automated control, the angular orientation α of the tiltable support structure(s) 20 (and respectively of the photovoltaic unit(s) 30) may be automatically adapted to obtain an ideal orientation of the photovoltaic unit(s) 30 relative to the sun. For controlling the actuator 50, a control unit 65 may be provided, including software and/or hardware. The control unit 65 may consider day-time, season, and/or geographical position for adjusting the angular orientation via the actuator.

Further, the actuator 50 may be coupled to an anemometer 60 (e.g. via control unit 65), so as to adjust an angular orientation α of the tiltable support structures (20) depending on a measured wind speed. In an alternative embodiment, the actuator 50 may be controlled based on external weather data, e.g. provided by a weather station or any other external provider to the control unit 65.

For example, if wind speeds exceed a first predefined threshold, the modules can be folded and only unfolded, in case the wind speeds drop below a second predefined threshold, which is lower than the first predefined threshold. In a further scenario, the actuator can be used to adjust the angular orientation to steeper angles in order to allow snow lying on the photovoltaic units 30 to slide off.

The system shown in Fig. 4 is mounted via mounting frames 2, 3 of a roofing. This roofing is not limited and may be of any material. Further, the roofing may be a roofing of a building, a terrace roofing, a garage roofing, a carport roofing, a garbage can storage roofing, a raised bed roofing a greenhouse roofing, a pool house roofing or even a wall covering.

The modules 100, 101, 102 may be arranged in close proximity to each other and may even be interconnected. Further, the modules 100, 101, 102 may sandwich planting tray(s) or modules 103, 104 having no photovoltaic unit. Thus, in a modular vegetalized roof and/or vegetalized wall photovoltaic system 1, modules 100, 101, 102 with tiltable support structure 20 and a photovoltaic unit 30 may be arranged together with modules 103, 104 having only a planting tray.

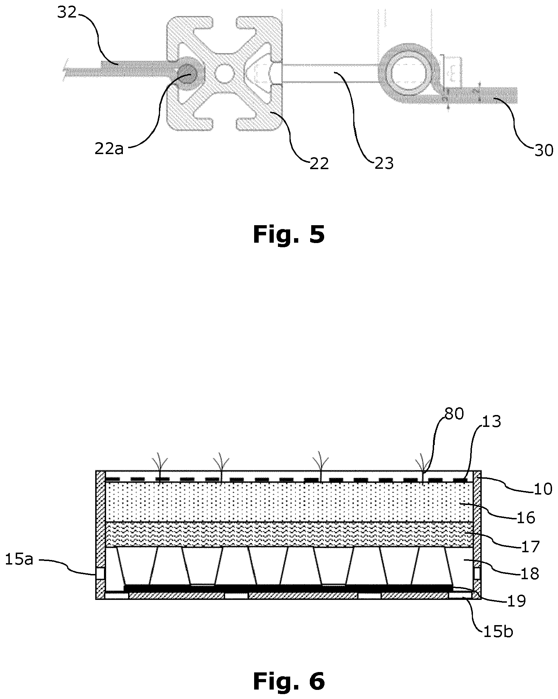

Fig. 5 is a schematic detailed view of a support structure, particularly a tiltable beam 22 showing different ways of mounting a photovoltaic unit 30, 32 to said tiltable support structure. On the left side, the beam 22 includes a welting rail 22a, for receiving a welting assigned to the photovoltaic unit 32. By means of said welting, a flexible layer of the photovoltaic unit 32 can be fastened to the beam 20. Further, at least one tensioning means 23 may be provided. The tensioning means 23 may be a threaded bolt connecting the beam 22 and the photovoltaic unit 30. This serves to adjust a tensioning of a flexible photovoltaic unit 30.

Fig. 6 is a schematic cut view of a planting tray 10, comprising a planting structure. The planting structure may be a multi-layered planting structure. As shown in Fig. 6, the multi-layer planting structure may have an upper planting layer 16, a substrate layer 17 arranged below the planting layer and a water drainage layer 18 underneath the substrate layer 17. Further, a root-resistant layer 19 may be arranged below the water drainage layer.

The planting layer 16 includes plants 80 and/or seeds. The substrate layer 17 allows the plants 80 to form roots. Additionally, fertilizers may be present in the substrate layer 17. The water drainage layer 19 may include a knobbed panel or knobbed film with a large number of water-impermeable depressions which form individual water containers. The root-resistant layer 19 may include or even consists of a root-resistant film (e.g. bitumen and/or plastics) or a root-resistant plate.

Further, the planting tray 10 may comprise drainage holes 15a, 15b which may be provided in the bottom and/or at least one side wall of the planting tray. Those drainage hole may be in fluidic communication with a neighboring planting tray (not shown).

Further, the planting tray 10 may be (at least partially) covered by a retaining structure 13, allowing to install the planting tray in a very steep or even vertical orientation, so as to provide a wall vegetalization. The retaining structure may include retaining bars, a retaining grid, a retaining net and/or retaining textile (e.g. a non-woven). The retaining structure prevents the multi-layer planting structure from falling (or trickling) out of the planting tray, while allowing plants to grow through the structure.

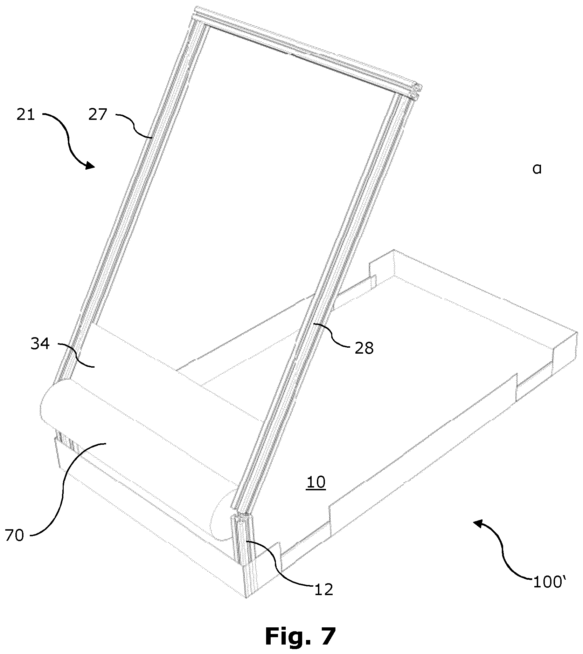

Fig. 7 is a schematic view of a module 100' for a vegetalized roof or vegetalized wall having a rollable photovoltaic unit 34. Accordingly, the photovoltaic unit 34 being supported by the support structure 21 can be rolled-up and unrolled. In Fig. 7, the rollable photovoltaic unit 34 is partially unrolled. Accordingly, only parts of the planting tray 10 are covered by the rollable photovoltaic unit 34.

The support structure 21 may be tiltable, as outlined above, or may be non-tiltable (fixed in a pre-defined angular orientation). Here, the photovoltaic unit 34 is supported by the support structure 21 so as to be movable (rollable) relative to the planting tray 10.

The support structure 21, supports an axis of the rollable photovoltaic unit 34, so as to allow the photovoltaic unit to be unrolled or rolled-up. Lateral edges of the photovoltaic unit 34 are guided in guide rails 27, 28, being part of the support structure 21.

The unrolling/rolling-up of the photovoltaic unit 34 may be done manually or may be actuated by means of an actuator (not shown). The actuator may be an electric motor, particularly an electric motor having an external rotor, which may act as axis for the rollable photovoltaic unit 34.

To protect the photovoltaic unit 34 from environmental influences, it may be stored in a housing 70 when being rolled-up. Further, the rollable photovoltaic unit 34 may be pre-tensioned, so as to automatically retracted in the housing 70, when being not in use.

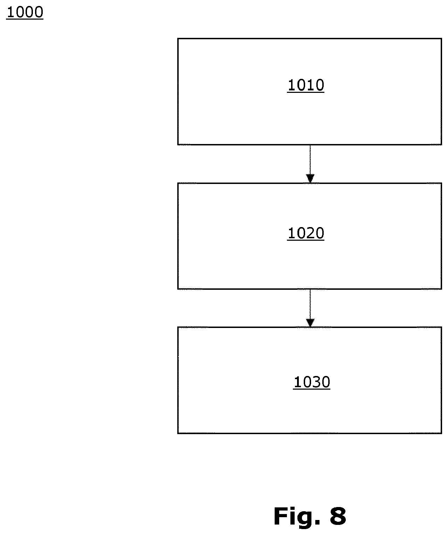

Fig. 8 is a schematic flow diagram of a method 1000 for operating a modular vegetalized roof and/or vegetalized wall photovoltaic system. The method including the steps of
- obtaining 1010 a wind speed, e.g. using an anemometer of the system and/or an external weather data source, and
- adjusting 1020 the angular orientation of respective ones of tiltable support structures based on the obtained wind speed; the method optionally comprising the step of
- adjusting 1030 the angular orientation of respective ones of tiltable support structures based on one of the following:
   ∘ a day time,
   ∘ a seasonal sun position, and/or
   ∘ a geographic location of the system.

The method may be performed by a control unit 65 of the system 1, or an external computing unit being able to control the at least one actuator 50 of the system 1.

Some of the embodiments contemplated herein are described more fully with reference to the accompanying figures. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

### List of reference signs

- 1: modular vegetalized roof or vegetalized wall photovoltaic system
- 2: mounting frame
- 3: mounting frame
- 5: roofing
- 10: planting tray
- 12: spacing element
- 13: retaining structure
- 14: additional support element
- 16: planting layer
- 17: substrate layer
- 18: water drainage layer
- 19: root-resistant layer
- 15a: drainage hole (bottom)
- 15b: drainage hole (side wall)
- 20: tiltable support structure
- 21: support structure
- 22: tiltable beam
- 22a: rail
- 23: tensioning means
- 24: tiltable beam
- 26: tiltable frame
- 27: guide rail
- 28: guide rail
- 30: photovoltaic unit32 photovoltaic unit
- 34: rollable photovoltaic unit
- 40: pre-loading element
- 50: actuator
- 52: gearing
- 60: anemometer
- 65: control unit
- 70: housing
- 80: plant
- 100: module for a modular vegetalized roof or vegetalized wall photovoltaic system
- 100': module for a modular vegetalized roof or vegetalized wall photovoltaic system
- 101: module for a modular vegetalized roof or vegetalized wall photovoltaic system
- 102: module for a modular vegetalized roof or vegetalized wall photovoltaic system
- 103: module without photovoltaic unit
- 104: module without photovoltaic unit
- 1000: method
- 1010: obtaining a wind speed
- 1020: adjusting the angular orientation of respective ones of tiltable support structures
- 1030: adjusting the angular orientation of respective ones of tiltable support structures
- α: angular orientation (tilting angle)

## Claims

1. A module (100) for a modular vegetalized roof or vegetalized wall photovoltaic system (1), the module comprising
a planting tray (10), the planting tray (10) being adapted for receiving a planting structure for growing plants;
a support structure (20), being attached to the planting tray, and
a photovoltaic unit (30), the photovoltaic unit being supported by the support structure (20).

2. The module (100) according to claim 1, wherein the support structure (20) is a tiltable support structure, wherein said tiltable support structure is configured to be fixedly arranged in different tilting angles (α), relative to the planting tray (10).

3. The module (100) according to any preceding claim, wherein the support structure can be tilted from a first angular orientation to a second angular orientation, wherein
in the first angular orientation, the photovoltaic unit (30) is substantially parallel to the planting tray (10), and wherein
in the second angular orientation, the photovoltaic unit (30) is substantially perpendicular to the planting tray (10).

4. The module (100) according to any preceding claim, wherein the support structure (20) includes at least one tiltable beam (22, 24), wherein the photovoltaic unit (30) is mounted on the tiltable beam, and/or
wherein the support structure includes a tiltable frame (26), wherein the photovoltaic unit (30) is mounted on the tiltable frame, the frame at least partially surrounding the photovoltaic unit (30).

5. The module (100) according to any preceding claim, wherein the photovoltaic unit (30) is configured to be rolled-up, wherein the photovoltaic unit (30) is supported rollable in the support structure.

6. The module (100) according to any preceding claim, wherein a spacing element (12) is provided between the planting tray (10) and the support structure (20), so that the photovoltaic unit (30) is spaced apart from the planting tray (10) when being in parallel orientation relative to the planting tray (10).

7. The module (100) according to any preceding claim, further comprising an additional support element (14), wherein the additional support element (14) abuts the support structure (20), when the support structure (20) is in parallel orientation relative to the planting tray (10), optionally further comprising a locking element for locking the support structure (20) in a parallel orientation relative to the planting tray (10).

8. The module (100) according to any one of claims 2 to 7, further comprising at least one pre-loading element, the pre-loading element (40) being configured for pre-loading the tiltable support structure (20) in a predefined angular orientation (α).

9. The module (100) according to any preceding claim, further comprising an actuator (50), wherein the actuator (50) is adapted to adjust the angular orientation of the support structure (20), wherein the actuator optionally includes a gearing (52), and/or wherein the actuator is adapted to unroll and/or roll-up the rollable photovoltaic unit.

10. The module (100) according to the preceding claim, wherein the actuator (50) is coupled to an anemometer (60) or an external weather data source, so as to adjust an angular orientation (α) of the tiltable support structure (20) and/or an unrolling portion of the rollable photovoltaic unit depending on a wind speed.

11. The module (100) according to any preceding claim, wherein the photovoltaic unit (30) is semitransparent and/or includes transparent areas.

12. The module (100) according to any preceding claim, wherein the photovoltaic unit (30) is a photovoltaic unit (30) chosen from the group of:
an organic photovoltaic, OPV, module;
a crystalline silicon photovoltaic unit;
an amorphous silicon photovoltaic unit;
a CIGS photovoltaic unit;
a CZTS photovoltaic unit;
a DSSC photovoltaic unit
a perovskite photovoltaic unit,
a III-V materials based photovoltaic unit, and/or
a combination thereof.

13. The module (100) according to any preceding claim, wherein the photovoltaic unit (30) includes a flexible support layer, carrying a photovoltaic layer and/or at least one photovoltaic cell.

14. The module (100) according to any preceding claim, wherein the photovoltaic unit (30) is mounted to the support structure (20) by means of at least one tensioning means (23).

15. A modular vegetalized roof and/or vegetalized wall photovoltaic system (1), the system comprising at least two modules (100; 101) according to any one of claims 1 to 12.

16. The system (1) according to claim 15, further comprising at least one actuator (50), wherein the at least one actuator (50) is assigned to a plurality of modules (100; 101) of the system, wherein the actuator (50) is adapted to adjust the angular orientation of respective ones of tiltable support structures (20) and/or an unrolling portion of the rollable photovoltaic unit, wherein the actuator (50) optionally includes a gearing (52).

17. The system (1) according to claim 15 or 16, further comprising at least one mounting frame (2, 3), wherein the mounting frame (2, 3) is adapted to be installed on a roofing (6) or a wall, and wherein the at least two modules (100; 101; 102) are adapted to be fixed on the mounting frame (2, 3).

18. A method (1000) for operating a modular vegetalized roof and/or vegetalized wall photovoltaic system (1) according to any one of claims 15 to 17, the method including the steps of
obtaining (1010) a wind speed, and
adjusting (1020) the angular orientation of respective ones of tiltable support structures (20) and/or an unrolling portion of the rollable photovoltaic unit based on the obtained wind speeds; the method optionally comprising the step of
adjusting (1030) the angular orientation of respective ones of tiltable support structures (20) and/or an unrolling portion of the rollable photovoltaic unit based on one of the following:
a day time,
a seasonal sun position, and/or
a geographic location of the system.
